# EUROPEAN PATENT APPLICATION

(11) **EP 4 572 404 A1**
(43) Date of publication of application: **18.06.2025**
(21) Application number: 23853061.2
(22) Date of filing: 11.08.2023
(51) Int. Cl.: H04W 40/02, H04W 40/24, H04W 76/11, H04L 67/141, H04W 88/14

(54) **METHOD AND DEVICE FOR GENERATING URSP RULE IDENTIFIER IN WIRELESS COMMUNICATION SYSTEM**

(30) Priority: 12.08.2022 US 202263397388 P
(71) Applicant: LG Electronics Inc., Yeongdeungpo-gu Seoul 07336 (KR)
(72) Inventor: CHOE, Hyunjung, Seoul 06772 (KR); KIM, Hyun Sook, Seoul 06772 (KR)
(74) Representative: Maikowski & Ninnemann Patentanwälte Partnerschaft mbB
(86) International application number: PCT/KR2023/011916
(87) International publication number: WO 2024/035195

(57) **Abstract**

A method of operating a terminal in a wireless communication system may comprise receiving UE policy information from a network, generating at least one UE route selection policy (URSP) rule identifier based on the UE policy information received from the network, the terminal applying a first URSP rule to a protocol data unit (PDU) session, and transmitting first URSP information to the network based on the first URSP rule applied to the PDU session. The first URSP information may include the first URSP rule identifier related to the first URSP rule applied to the PDU session and a first UE policy section code (UPSC).

## Description

### Technical Field

The following description relates to a wireless communication system and a method and device for generating a URSP rule identifier.

### Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

### Disclosure

### Technical Problem

The present disclosure relates to a method and device for generating a URSP rule identifier in a wireless communication system.

The present disclosure relates to a method and device for receiving UE policy information from a network and generating a URSP rule identifier based on the received UE policy information by a terminal in a wireless communication system.

The present disclosure relates to a method and device for configuring parameters for a PDU session establishment message based on a URSP rule applied to a PDU session when a terminal does not establish a PDU (protocol data unit) session matching a URSP for application traffic transmission in a wireless communication system.

The present disclosure relates to a method and device for transmitting URSP information including a URSP rule identifier corresponding to a URSP rule applied to a PDU session to a network by a terminal in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

As an example of the present disclosure, a method of operating a terminal in a wireless communication system may comprise receiving UE policy information from a network, generating at least one UE route selection policy (URSP) rule identifier based on the UE policy information received from the network, the terminal applying a first URSP rule to a protocol data unit (PDU) session, and transmitting first URSP information to the network based on the first URSP rule applied to the PDU session. The first URSP information may include the first URSP rule identifier related to the first URSP rule applied to the PDU session and a first UE policy section code (UPSC).

Also, as an example of the present disclosure, a terminal operating in a wireless communication system may comprise at least one transceiver, at least one processor, and at least one memory operably connected to the at least one processor and configured to store instructions that, when executed, cause the at least one processor to perform a specific operation. The specific operation may control the transceiver to receive UE policy information from a network, generate at least one UE route selection policy (URSP) rule identifier based on the UE policy information received from the network, enable the terminal to apply a first URSP rule to a protocol data unit (PDU) session, and control the transceiver to transmit first URSP information to the network based on the first URSP rule applied to the PDU session. The first URSP information may include the first URSP rule identifier related to the first URSP rule applied to the PDU session and a first UE policy section code (UPSC).

Also, as an example of the present disclosure, a method of operating a network in a wireless communication system may comprise transmitting UE policy information to a terminal and receiving first UE route selection policy (URSP) information from the terminal. The terminal may generate at least one UE route selection policy (URSP) rule identifier based on the UE policy information, based on the terminal applying a first URSP rule to a protocol data unit (PDU) session, the terminal may transmit the first URSP information based on the first URSP rule applied to the PDU session, and the first URSP information may include the first URSP rule identifier related to the first URSP rule applied to the PDU session and a first UE policy section code (UPSC).

Also, as an example of the present disclosure, a network operating in a wireless communication system may comprise at least one transceiver, at least one processor, and at least one memory operably connected to the at least one processor and configured to store instructions that, when executed, cause the at least one processor to perform a specific operation. The specific operation may control the transceiver to transmit UE policy information to a terminal and control the transceiver to receive first UE route selection policy (URSP) information from the terminal. The terminal may generate at least one UE route selection policy (URSP) rule identifier based on the UE policy information, based on the terminal applying a first URSP rule to a protocol data unit (PDU) session, the terminal may transmit the first URSP information based on the first URSP rule applied to the PDU session, and the first URSP information may include the first URSP rule identifier related to the first URSP rule applied to the PDU session and a first UE policy section code (UPSC).

Also, as an example of the present disclosure, a device may comprise at least one memory and at least one processor functionally connected to the at least one memory. The at least one processor may control the device to receive UE policy information from a network, generate at least one UE route selection policy (URSP) rule identifier based on the UE policy information received from the network, apply a first URSP rule to a protocol data unit (PDU) session and transmit first URSP information to the network based on the first URSP rule applied to the PDU session. The first URSP information may include the first URSP rule identifier related to the first URSP rule applied to the PDU session and a first UE policy section code (UPSC).

Also, as an example of the present disclosure, a non-transitory computer-readable medium storing at least one instruction may comprise the at least one instruction executable by a processor. The at least one instruction may control a device to receive UE policy information from a network, generate at least one UE route selection policy (URSP) rule identifier based on the UE policy information received from the network, apply a first URSP rule to a protocol data unit (PDU) session and transmit first URSP information to the network based on the first URSP rule applied to the PDU session. The first URSP information may include the first URSP rule identifier related to the first URSP rule applied to the PDU session and a first UE policy section code (UPSC).

In addition, the following matters may be applied commonly.

As an example of the present disclosure, the URSP information may further include first public and mobile network (PLMN) information.

Also, as an example of the present disclosure, the terminal may obtain the UE policy information from a policy control function (PCF) through a manage UE policy command message.

Also, as an example of the present disclosure, based on the terminal obtaining the UE policy information, the terminal may derive a UE policy section identifier (UPSI) and at least one URSP rule from a UE policy section management list parameter, and the terminal may derive the UPSI based on a PLMN ID and a UPSC and derives the at least one URSP rule from a UE policy contents parameter based on a UE policy type parameter.

Also, as an example of the present disclosure, the terminal may generate a URSP rule context for each of the at least one URSP rule based on the obtaining of the at least one URSP rule, and the URSP rule context may include PLMN information, a UPSC and a URSP rule identifier.

Also, as an example of the present disclosure, the terminal may assign the URSP rule identifier according to a URSP rule order in the UE policy contents parameter based on the UE policy information.

Also, as an example of the present disclosure, the assigned URSP rule identifier may be associated with the UPSC and the PLMN information, and the URSP rule context may include URSP rule information transmitted to the network.

Also, as an example of the present disclosure, the terminal may include preconfigured local policy information, and based on the terminal configuring the PDU session message, the terminal may generate at least one parameter of the PDU session message based on the first URSP rule without using local policy information.

Also, as an example of the present disclosure, based on the terminal configuring the PDU session message based on the first URSP rule, the terminal may transmit the first URSP information corresponding to a first URSP rule to the network.

Also, as an example of the present disclosure, the terminal may transmit the first URSP information to an access management function (AMF) through a UL NAS TRANSPORT message.

Also, as an example of the present disclosure, the terminal may transmit the first URSP information to a session management function (SMF) through a PDU session establishment request message.

Also, as an example of the present disclosure, the terminal may transmit the first URSP information to a policy control function (PCF) through a UE state indication message.

### Advantageous Effects

The present disclosure can provide a method and device for generating a URSP rule identifier in a wireless communication system.

The present disclosure can provide a method and device for receiving UE policy information from a network and generating a URSP rule identifier based on the received UE policy information by a terminal in a wireless communication system.

The present disclosure can provide a method and device for configuring parameters for a PDU session establishment message based on a URSP rule applied to a PDU session when a terminal does not establish a PDU (protocol data unit) session matching a URSP for application traffic transmission in a wireless communication system.

The present disclosure can provide a method and device for transmitting URSP information including a URSP rule identifier corresponding to a URSP rule applied to a PDU session to a network by a terminal in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

It will be appreciated by persons skilled in the art that that the effects that can be achieved through the embodiments of the present disclosure are not limited to those described above and other advantageous effects of the present disclosure will be more clearly understood from the following detailed description. That is, unintended effects according to implementation of the present disclosure may be derived by those skilled in the art from the embodiments of the present disclosure.

### Description of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.
FIG. 1 is a view showing an example of a communication system applicable to the present disclosure.
FIG. 2 is a view showing an example of a UE to which the implementation of the present disclosure is applied.
FIG. 3 is a view showing an example of functional separation of a general NG-RAN and 5^{th} generation core (5GC).
FIG. 4 is a view showing an example of a general architecture of a 5^{th} generation (5G) system.
FIG. 5 is a diagram illustrating a UE policy section management list and a URSP rule applicable to the present disclosure.
FIG. 6 is a diagram illustrating provisioning of a URSP compliance verification procedure during a terminal registration procedure applicable to the present disclosure.
FIG. 7 is a diagram illustrating a method of performing URSP compliance verification in a PDU session establishment procedure applicable to the present disclosure.
FIG. 8 is a diagram showing URSP information applicable to the present disclosure.
FIG. 9 is a diagram illustrating a method of transmitting URSP information to a network by a terminal applicable to the present disclosure.

### Mode for Invention

Following embodiments are achieved by combination of structural elements and features of the present disclosure in a predetermined manner. Each of the structural elements or features should be considered selectively unless specified separately. Each of the structural elements or features may be carried out without being combined with other structural elements or features. Also, some structural elements and/or features may be combined with one another to constitute the embodiments of the present disclosure. The order of operations described in the embodiments of the present disclosure may be changed. Some structural elements or features of one embodiment may be included in another embodiment, or may be replaced with corresponding structural elements or features of another embodiment.

In the description of the drawings, procedures or steps which render the scope of the present disclosure unnecessarily ambiguous will be omitted and procedures or steps which can be understood by those skilled in the art will be omitted.

In the entire specification, when a certain portion "comprises" or "includes" a certain component, this indicates that the other components are not excluded, but may be further included unless specially described. The terms "unit", "-or/er" and "module" described in the specification indicate a unit for processing at least one function or operation, which may be implemented by hardware, software and a combination thereof. In addition, "a or an", "one", "the" and similar related words may be used as the sense of including both a singular representation and a plural representation unless it is indicated in the context describing the present specification (especially in the context of the following claims) to be different from this specification or is clearly contradicted by the context.

In this specification, the embodiments of the present disclosure are described with focus on the relationship of data reception and transmission between a base station and a mobile station. Herein, the base station means a terminal node of a network that performs direct communication with the mobile station. In this document, a specific operation, which is described to be performed by a base station, may be performed by an upper node of the base station in some cases.

That is, in a network consisting of a plurality of network nodes including a base station, various operations for communicating with a mobile station may be performed by the base station or network nodes other than the base station. Herein, "base station" may be replaced by such terms as "fixed station", "Node B", "eNode B(eNB)", "gNode B(gNB)", "ng-eNB", "advanced base station(ABS)", or "access point".

Also, in the embodiments of the present disclosure, "terminal" may be replaced by such terms as "user equipment(UE)", "mobile station(MS)", "subscriber station(SS)", "mobile subscriber station(MSS)", "mobile terminal" or "advanced mobile station(AMS)".

In addition, a transmission end refers to a fixed and/or mobile node that provides a data service or a voice service, and a reception end means a fixed and/or mobile node that receives a data service or a voice service. Accordingly, in the case of an uplink, a mobile station may be a transmission end, and a base station may be a reception end. Likewise, in the case of a downlink, a mobile station may be a reception end, and a base station may be a transmission end.

The embodiments of the present disclosure may be supported by standard documents disclosed in at least one of the following radio access systems: an IEEE 802 xx system, a 3rd generation partnership project (3GPP) system, a 3GPP long term evolution (LTE) system, a 3GPP 5th generation (5G) new radio (NR) system and a 3GPP2 system, and in particular, the embodiments of the present disclosure may be supported by the following documents: 3GPP TS (technical specification) 38.211, 3GPP TS 38.212, 3GPP TS 38.213, 3GPP TS 38.321, and 3GPP TS 38.331.

In addition, the embodiments of the present disclosure are applicable to another radio access system but is not limited to the above-described system. As an example, they are applicable to a system applied after a 3GPP 5G NR system and are not limited to a specific system.

That is, obvious steps and parts not described in the embodiments of the present disclosure may be described with reference to the above documents. In addition, all the terms disclosed in this document may be explained by the standard document.

Hereinafter, a preferred embodiment according to the present disclosure will be described in detail with reference to accompanying drawings. Detailed descriptions disclosed below together with accompanying drawings are intended to describe example embodiments of the present disclosure and not intended to show any sole embodiment in which a technical configuration of the present disclosure can be implemented.

In addition, specific terms used in the embodiments of the present disclosure are provided to help understand the present disclosure, and such specific terms may be used in any other modified forms without departing from the technical idea of the present disclosure.

The following technology may be applied to various radio access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA) and the like.

For clarity of explanation, the descriptions below are based on a 3GPP communication system (e.g. LTE, NR and the like), but the technical idea of the present disclosure is not limited thereto. LTE may mean a technology after 3GPP TS 36.xxx Release 8. Specifically, the LTE technology after 3GPP TS 36.xxx Release 10 may be referred to as LTE-A, and the one after 3GPP TS 36.xxx Release 13 may be referred to as LTE-A pro. 3GPP NR may mean a technology after TS 38.xxx Release 15. 3GPP 6G may mean a technology after TS Release 17 and/or Release 18. "xxx" means the specific number of a standard document. LTE/NR/6G may be referred to collectively as 3GPP system.

Contents described in standard documents released earlier than the present disclosure may be referred to for the background art, terms and abbreviations used in the present disclosure. As an example, 36.xxx and 38.xxx standard documents may be referred to.

For terms, abbreviations, and other backgrounds that may be used in this document, reference may be made to the following standard document descriptions published prior to this document. In particular, terms, abbreviations, and other background technologies related to LTE/EPS (Evolved Packet System) may refer to 36.xxx series, 23.xxx series, and 24.xxx series, and NR (new radio)/5GS related terms and abbreviations and other backgrounds may refer to the 38.xxx series, 23.xxx series and 24.xxx series.

Hereinafter, the present disclosure is described based on the terms defined as above.

Three major requirement areas of 5G include (1) an enhanced mobile broadband (eMBB) area, (2) a massive machine type communication (mMTC) area, and (3) an ultra-reliable and low latency communications (URLLC) area.

Some use cases may require multiple areas for optimization, and other use case may be focused on only one key performance indicator (KPI). 5G supports these various use cases in a flexible and reliable method.

### Communication system applicable to the present disclosure

Although not limited thereto, various descriptions, functions, procedures, proposals, methods and/or operating flowcharts of the present disclosure disclosed herein may be applied to various fields requiring wireless communication/connection (e.g., 5G) between devices.

Hereinafter, more detailed illustrations will be presented with reference to drawings. In the drawings/description below, unless otherwise mentioned, the same drawing symbol may illustrate the same or corresponding hardware block, software block or functional block.

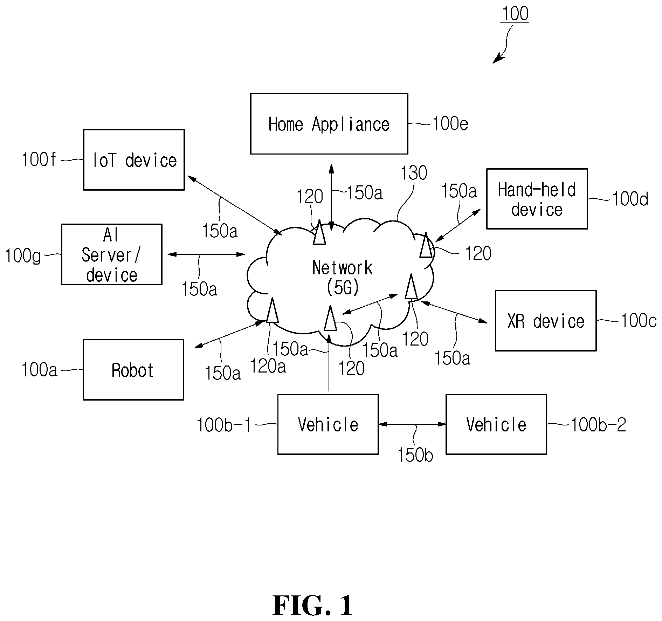

FIG. 1 is a view showing an example of a communication system applied to the present disclosure.

Referring to FIG. 1, a communication system 100 applied to the present disclosure includes a wireless device, a base station, and a network. Herein, the wireless device means a device performing communication using a wireless connection technology (e.g., 5G NR, LTE) and may be referred to as a communication/wireless/5G device. Without being limited thereto, the wireless device may include a robot 100a, vehicles 100b-1 and 100b-2, an extended reality (XR) device 100c, a hand-held device 100d, a home appliance 100e, an Internet of Thing (IoT) device 100f, and an artificial intelligence (AI) device/server 100g. For example, a vehicle may include a vehicle equipped with a wireless communication function, an autonomous driving vehicle, a vehicle capable of performing vehicle-to-vehicle communication, and the like. Herein, the vehicles 100b-1 and 100b-2 may include an unmanned aerial vehicle (UAV) (e.g., drone). The XR device 100c may include an augmented reality (AR)/virtual reality (VR)/mixed reality (MR) device and may be embodied in forms of a head-up display (HUD) installed in a vehicle, a television, a smartphone, a computer, a wearable device, a home appliance, digital signage, a vehicle, a robot, and the like. The hand-held device 100d may include a smartphone, a smart pad, a wearable device (e.g., a smart watch, smart glasses), a computer (e.g., a notebook and the like) and the like. The home appliance 100e may include a TV, a refrigerator, a washing machine, and the like. The IoT device 100f may include a sensor, a smart meter, and the like. For example, the base station 120 and the network 130 may be embodied as wireless devices, and a specific wireless device 120a may operate as a base station/network node to another wireless device.

The wireless devices 100a to 100f may be connected to the network 130 via the base station 120. AI technology may be applied to the wireless devices 100a to 100f, and the wireless devices 100a to 100f may be connected to the AI server 100g through the network 130. The network 130 may be constructed using a 3G network, a 4G(e.g., LTE) network or a 5G(e.g., NR) network. The wireless devices 100a to 100f may communicate with each other through the base station 120/the network 130 but perform direct communication (e.g., sidelink communication) not through the base station 120/the network 130. For example, the vehicles 100b-1 and 100b-2 may perform direct communication (e.g., vehicle to vehicle (V2V)/vehicle to everything (V2X) communication). In addition, the IoT device 100f (e.g., a sensor) may communicate directly with another IoT device (e.g., a sensor) or another wireless device 100a to 100f.

Wireless communication/connection 150a, 150b and 150c may be made between the wireless devices 100a to 100f/the base station 120 and the base station 120/the base station 120. Herein, wireless communication/connection may be performed through various wireless connection technologies (e.g., 5G NR) such as uplink/downlink communication 150a, sidelink communication 150b (or D2D communication), and base station-to-base station communication 150c (e.g., relay, integrated access backhaul (IAB)). A wireless device and a base station/a wireless device and a base station and a base station may transmit/receive radio signals through the wireless communication/connections 150a, 150b and 150c. For example, the wireless communication/connections 150a, 150b and 150c may transmit/receive a signal through various physical channels. To this end, based on various proposals of the present disclosure, at least a part of various processes of setting configuration information for transmission/reception of a radio signal, various processes of processing a signal (e.g., channel encoding/decoding, modulation/demodulation, resource mapping/demapping, and the like), and a resource allocation process may be performed.

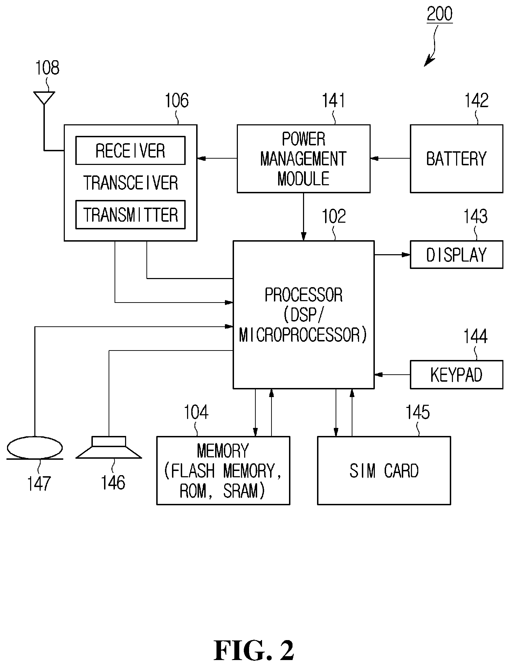

FIG. 2 is a view showing an example of a UE to which the implementation of the present disclosure is applied.

Referring to FIG. 2, a UE 200 may include a processor 202, a memory 204, a transceiver 206, one or more antennas 208, a power management module 241, a battery 242, a display 243, a keypad 244, a subscriber identification module (SIM) card 245, a speaker 246, and a microphone 247.

The processor 202 may be configured to implement a description, a function, a procedure, a proposal, a method and/or an operating flowchart disclosed in the present specification. The processor 202 may be configured to control one or more different components of the UE 200 to implement a description, a function, a procedure, a proposal, a method and/or an operating flowchart disclosed in the present specification. A layer of a wireless interface protocol may be embodied in the processor 202. The processor 202 may include an ASIC, other chipsets, a logic circuit and/or a data processing device. The processor 202 may be an application processor. The processor 202 may include at least one of a DSP, a central processing unit (CPU), a graphics processing unit (GPU), and a modem (modulator and demodulator).

The memory 204 may be coupled operably with the processor 202 and store various information for operating the processor 202. The memory 204 may include a ROM, a RAM, a flash memory, a memory card, a storage medium and/or another storage device. In case of implementation in software, a technology described herein may be implemented using a module (e.g., a procedure, a function, and the like) executing a description, a function, a procedure, a proposal, a method and/or an operating flowchart disclosed in the present specification. The module may be stored in the memory 204 and be executed by the processor 202. The memory 204 may be embodied in the processor 202 or outside the processor 202 in which case the memory 204 may be communicatively coupled with the processor 202 through various methods known in technology.

The transceiver 206 may be operably coupled with the processor 202 and transmit and/or receive a radio signal. The transceiver 206 may include a transmitter and a receiver. The transceiver 206 may include a baseband circuit for processing a radio frequency signal. The transceiver 206 may transmit and/or receive a radio signal by controlling the one or more antennas 208.

The power management module 241 may manage the power of the processor 202 and/or the transceiver 206. The battery 242 may supply power to the power management module 241.

The display 243 may output a result processed by the processor 202. The keypad 244 may receive an input to be used in the processor 202. The keypad 244 may be displayed on the display 243.

The SIM card 245 is an integrated circuit for safely storing an international mobile subscriber identity (IMSI) and a relevant key and may be used to identify and authenticate a subscriber in a hand-held telephone device like a mobile phone or a computer. In addition, contact information may be stored in many SIM cards.

The speaker 246 may output a sounded-related result processed in the processor 202. The microphone 247 may receive a sounded-related input to be used in the processor 202.

In an implement of the present specification, a UE may operate as a transmitting device in an uplink and a receiving device in a downlink. In an implement of the present specification, a base station may operate as a receiving device in a UL and a transmitting device in a DL. In the present specification, a base station may be referred to as a node B (Node B), an eNode B (eNB), and a gNB and may not be limited to a specific form.

In addition, as an example, a UE may be embodied in various forms according to a use example/service. A UE may be configured by various components, devices/parts and/or modules. For example, each UE may include a communication device, a control device, a memory device, and an addition component. A communication device may a communication circuit and a transceiver. For example, a communication circuit may include one or more processors and/or one or more memories. For example, a transceiver may include one or more transceivers and/or one or more antennas. A control device may be electrically coupled with a communication device, a memory device and an additional component and control an overall operation of each UE. For example, a control device may control an electric/mechanical operation of each UE based on a program/a code/an instruction/information stored in a memory device. A control device may transmit information stored in a memory device to the outside (e.g., another communication device) via a communication device through a wireless/wired interface or store information received from the outside (e.g., another communication device) through the wireless/wired interface in the memory device.

An additional component may be configured in various ways according to a type of a UE. For example, an additional component may include at least one of a power device/battery, an input/output (I/O) device (e.g., an audio I/O port, a video I/O port), a driving device, and a computing device. In addition, without being limited thereto, a UE may be embodied in forms of the robot 100a of FIG. 1, the vehicles 100b-1 and 100b-2 of FIG. 1, the XR device 100c of FIG. 1, the hand-held device 100d of FIG. 1, the home appliance 100e of FIG. 1, the IoT device 100f of FIG. 1, a digital broadcast terminal, a hologram device, a public safety device, an MTC device, a medical device, a fintech device (or financial device), a security device, a climate/environment device, the AI server/device 100g of FIG. 1, the base station 120 of FIG. 1, and a network node. A UE may be used a mobile or fixed place according to a use example/service.

Various components, devices/parts and/or all the modules of a UE may be connected to each other through a wired interface, or at least a part thereof may be wirelessly connected through a communication device. In addition, each component, a device/a part and/or a module of a UE may further include one or more components. For example, a control device may be configured by a set of one or more processors. As an example, a control device may be configured by a set of a communication control processor, an application processor (AP), an electronic control unit (ECU), a GPU, and a memory control processor. As anther example, a memory device may be configured by a RAM, a dynamic RAM (DRAM), a ROM, a flash memory, a volatile memory, a non-volatile memory, and/or a combination thereof.

### 5G System Architecture to which the Present Disclosure is Applicable

A 5G system is an advanced technology from 4G LTE mobile communication technology and supports a new radio access technology (RAT), extended long term evolution (eLTE) as an extended technology of LTE, non-3GPP access (e.g., wireless local area network (WLAN) access), etc. through the evolution of the existing mobile communication network structure or a clean-state structure.

The 5G system is defined based on a service, and an interaction between network functions (NFs) in an architecture for the 5G system can be represented in two ways as follows.

Reference point representation: indicates an interaction between NF services in NFs described by a point-to-point reference point (e.g., N11) between two NFs (e.g., AMF and SMF).

Service-based representation: network functions (e.g., AMF) within a control plane (CP) allow other authenticated network functions to access its services. The representation also includes a point-to-point reference point, if necessary.

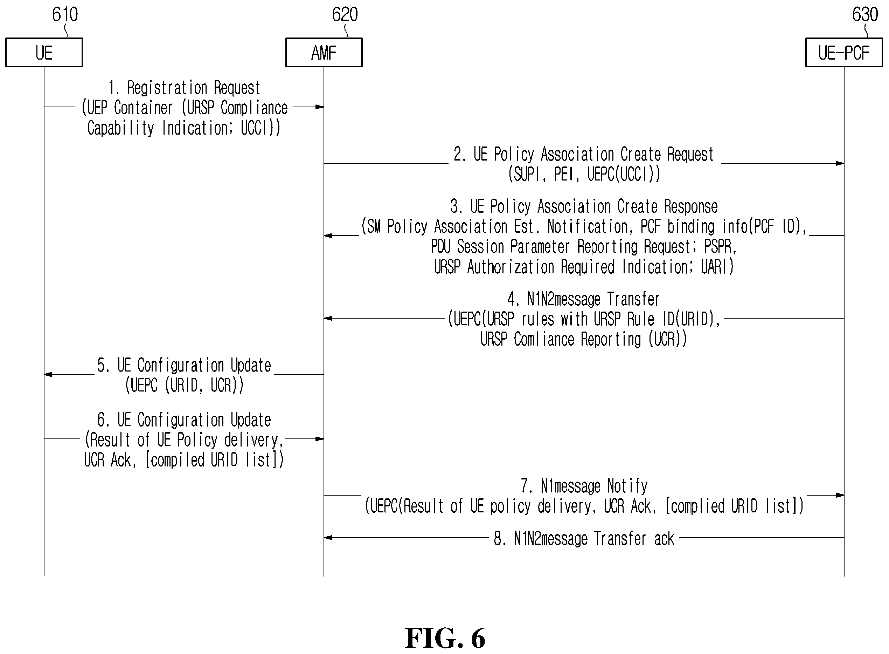

5GC (5G Core) may include various components, part of which are shown in FIG. 6, including an access and mobility management function (AMF), a session management function (SMF), a policy control function (PCF), a Prose user plane function (UPF), an application function (AF), unified data management (UDM), and a non-3GPP interworking function (N3IWF).

A UE is connected to a data network via the UPF through a next generation radio access network (NG-RAN) including the gNB. The UE may be provided with a data service even through untrusted non-3GPP access, e.g., a wireless local area network (WLAN). In order to connect the non-3GPP access to a core network, the N3IWF may be deployed.

The N3IWF performs a function of managing interworking between the non-3GPP access and the 5G system. When the UE is connected to non-3GPP access (e.g., WiFi referred to as IEEE 801.11), the UE may be connected to the 5G system through the N3IWF. The N3IWF performs control signaling with the AMF and is connected to the UPF through an N3 interface for data transmission.

The AMF may manage access and mobility in the 5G system. The AMF may perform a function of managing (non-access stratum) NAS security. The AMF may perform a function of handling mobility in an idle state.

The UPF performs a function of gateway for transmitting and receiving user data. The UPF node 440 may perform the entirety or a portion of a user plane function of a serving gateway (S-GW) and a packet data network gateway (P-GW) of 4G mobile communication.

The UPF is a component that operates as a boundary point between a next generation radio access network (NG-RAN) and the core network and maintains a data path between the gNB and the SMF. In addition, when the UE moves over an area served by the gNB, the UPF serves as a mobility anchor point. The UPF may perform a function of handling a PDU. For mobility within the NG-RAN (which is defined after 3GPP Release-15), the UPF may route packets. In addition, the UPF may also serve as an anchor point for mobility with another 3GPP network (RAN defined before 3GPP Release-15, e.g., universal mobile telecommunications system (UMTS) terrestrial radio access network (UTRAN), evolved (E)-UTRAN or global system for mobile communication (GERAN)/enhanced data rates for global evolution (EDGE) RAN. The UPF may correspond to a termination point of a data interface toward the data network.

The PCF is a node that controls an operator's policy. The AF is a server for providing various services to the UE. The UDM is a server that manages subscriber information, such as home subscriber server (HSS) of 4G mobile communication. The UDM stores and manages the subscriber information in a unified data repository (UDR).

The SMF may perform a function of allocating an Internet protocol (IP) address of the UE. In addition, the SMF may control a packet data unit (PDU) session.

For convenience of explanation, hereinafter, reference numerals may be omitted for AMF, SMF, PCF, UPF, AF, UDM, N3IWF, gNB, or UE, which may operate with reference to contents described in standard documents released earlier than the present document.

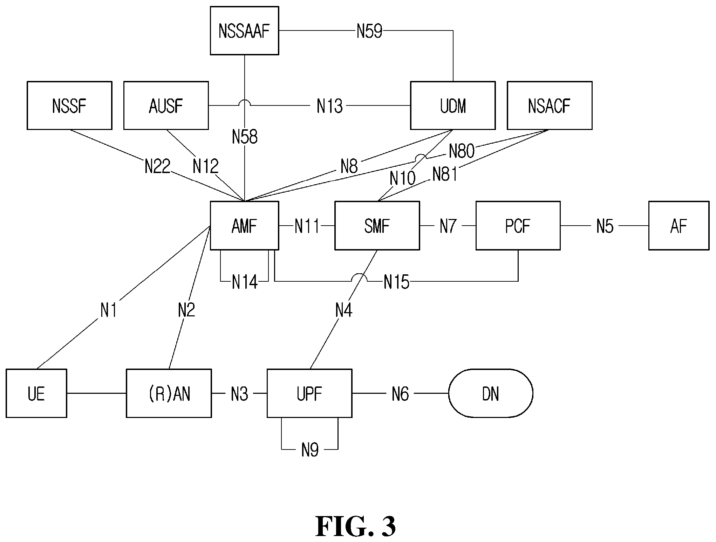

FIG. 3 is a view showing an example of expressing the structure of a wireless communication system applied to the present disclosure from a node perspective.

Referring to FIG. 3, a UE is connected to a data network (DN) through a next generation RAN. A control plane function (CPF) node performs all or a part of the functions of a mobility management entity (MME) of 4G mobile communication and all or a part of serving gateway (S-GW) and PDN gateway (P-GW) functions. The CPF node includes AMF and SMF.

A UPF node performs a function of a gateway in which data of a user is transmitted and received.

An authentication server function (AUSF) authenticates and manages a UE. A network slice selection function (NSSF) is a node for network slicing described below.

A network exposure function (NEF) provides a mechanism that safely opens the service and function of 5G core.

Reference points in FIG. 3 are described as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point between AMF and SMF. N12 represents a reference point between AMF and AUSF. N13 represents a reference point between UDM and AUSF. N14 represents a reference point between AMFs. N15 represents a reference point between PCF and AMF in a non-roaming scenario and a reference point between AMF and PCF of a visited network in a roaming scenario. N16 represents a reference point between SMFs. N22 represents a reference point between AMF and NSSF. N30 represents a reference point between PCF and NEF. N33 may represent a reference point between AF and NEF, and the above-described entity and interface may be configured with reference to contents described in standard documents released earlier than the present document.

A radio interface protocol is based on the 3GPP radio access network standard. The radio interface protocol is horizontally divided into a physical layer, a data link layer, and a network layer, and is vertically divided into a user plane for transmission of data information and a control plane for transfer of control signal (signaling).

The protocol layers may be divided into L1 (layer-1), L2 (layer-2), and L3 (layer-3) based on the three lower layers of the open system interconnection (OSI) reference model widely known in communication systems.

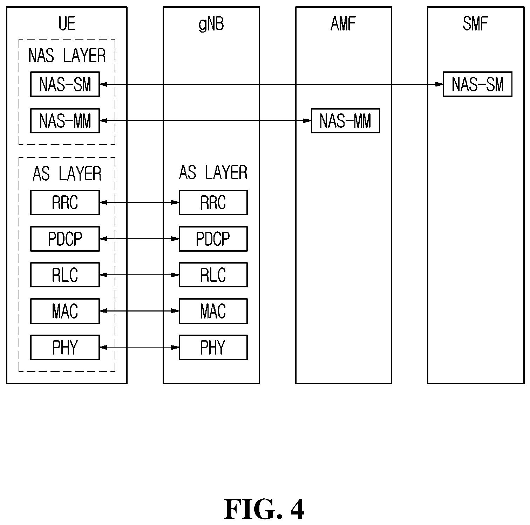

Hereinafter, the present disclosure describes each layer of a wireless protocol. FIG. 4 is a view showing an example of the structure of a radio interface protocol between a UE and a gNB.

Referring to FIG. 4, an access stratum (AS) layer may include a physical (PHY) layer, a medium access control layer, a radio link control (RLC) layer, a packet data convergence protocol (PDCP) layer, and a radio resource control (RRC) layer, and an operation based on each layer may be performed with reference to contents described standard documents released earlier than the present document.

For example, URSP rules may be provided to terminals based on network functions in an HPLMN (home public land mobile network). Therefore, when the terminal performs roaming or in the case of edge computing, URSP rule information may not be provided properly. Considering the above-mentioned points, URSP rules may be provided in VPLMNs other than HPLMNs, and are not limited to a specific form.

As another example, when a terminal does not establish a matching PDU session during application traffic transmission, the terminal needs to establish a new PDU session. Here, a network may not recognize whether URSP (UE route selection policy) of the new PDU session complies with a URSP rule. As an example, the terminal may report assistance information to the network to identify the URSP rule, through which the network may recognize the URSP rule applied by the terminal to establish or modify the PDU session.

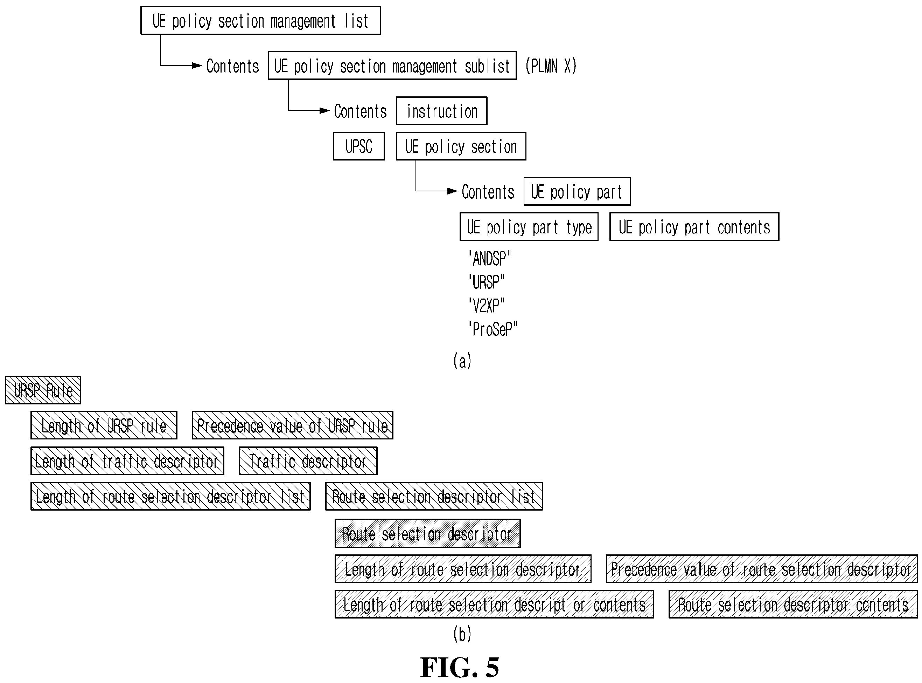

FIG. 5 is a diagram illustrating a UE policy section management list and a URSP rule applicable to the present disclosure. As an example, a network and a terminal may identify a UE policy based on a UE policy section identifier (UPSI). Here, the UPSI may include a PLMN ID part and a UE policy section code (UPSC). The PLMN ID part may include an ID of a PLMN based on a PCF providing the UE policy. As another example, the PLMN ID part may include a PLMN ID of a standalone non-public network (SNPN) based on the PCF. In addition, the UPSC may include a unique value within a PLMN or SNPN selected by the PCF.

Here, the terminal may receive UE policy information. For example, the terminal may receive UE policy information through a manage UE policy command message, but is not limited thereto. When the terminal receives UE policy information, the terminal may derive a PLMN ID and a UPSC from a UE policy section management list. Referring to FIG. 5(a), the UE policy section management list may include a UE policy section management sublist. For example, the UE policy section management sublist may not include a PLMN. The UE policy section management sublist may include an instruction and the UPSC described above as a UE policy section. Here, the UE policy section may include a UE policy part, and the UE policy part may include a UE policy part type and UE policy part contents. The UE policy part type may include at least one of "ANDSP", "URSP", "V2XP", or "ProSeP", but is not limited thereto. For example, ANDSP (access network discovery & selection policy) may include policy information considering a case where the terminal selects a non-3GPP access network. In addition, URSP may be used to determine whether to associate application traffic detected by the terminal with a previously created PDU session, offload to a non-3GPP access network other than the PDU session, or request creation of a new PDU session, but is not limited thereto. In addition, V2XP (V2X policy) may include policy information for V2X communication. In addition, ProSeP (ProSe policy) may include policy information for ProSe communication, but is not limited thereto.

Here, the terminal may check the UE policy part type to recognize a specific URSP rule. As a more specific example, the terminal for recognizing the specific URSP rule may recognize "URSP" (or ANDSP) as the UE policy part type, and based on this, one or more URSP rules may be included in the UE policy part contents. As an example, the granularity by which the terminal distinguishes UE policy information may be a UPSI unit.

Here, the format of the URSP rule transmitted to the terminal may be as shown in FIG. 5(b). Specifically, the URSP rule may be determined as shown in Table 1 below, but may not be limited thereto.

**[Table 1]**

| 8 | 7 | 6 | 5 | 4 | 3 | 2 | 1 | |
|---|---|---|---|---|---|---|---|---|
| URSP rule 1 | | | | | | | | octet q+3 |
| | | | | | | | | octet s |
| URSP rule 2 | | | | | | | | octet s+1* |
| | | | | | | | | octet t* |
| ... | | | | | | | | octet t+1* |
| | | | | | | | | octet u* |
| URSP rule n | | | | | | | | octet u+1* |
| | | | | | | | | octet r* |

In addition, each URSP rule may include at least one of length of URSP rule, precedence value of URSP rule, length of traffic descriptor, traffic descriptor, length of route selection descriptor list, or a route selection description list, as shown in Table 2 below.

**[Table 2]**

| 8 | 7 | 6 | 5 | 4 | 3 | 2 | 1 | |
|---|---|---|---|---|---|---|---|---|
| Length of URSP rule | | | | | | | | octet v |
| | | | | | | | | octet v+1 |
| Precedence value of URSP rule | | | | | | | | octet v+2 |
| Length of traffic descriptor | | | | | | | | octet v+3 |
| | | | | | | | | octet v+4 |
| Traffic descriptor | | | | | | | | octet v+5 |
| | | | | | | | | octet w |
| Length of route selection descriptor list | | | | | | | | octet w+1 |
| | | | | | | | | octet w+2 |
| Route selection descriptor list | | | | | | | | octet w+3 |
| | | | | | | | | octet x |

Here, the route selection description list may include each route selection descriptor as shown in Table 3 below. In addition, each route selection descriptor may include at least one of length of route selection descriptor, precedence value of route selection descriptor, length of route selection descriptor contents, or the route selection descriptor contents as shown in Table 4 below.

**[Table 3]**

| 8 | 7 | 6 | 5 | 4 | 3 | 2 | 1 | |
|---|---|---|---|---|---|---|---|---|
| Route selection descriptor 1 | | | | | | | | octet w+3 |
| | | | | | | | | octet y |
| Route selection descriptor 2 | | | | | | | | octet y+1* |
| | | | | | | | | octet z* |
| ... | | | | | | | | octet z+1* |
| | | | | | | | | octet a* |
| Route selection descriptor m | | | | | | | | octet a+1* |
| | | | | | | | | octet x* |

**[Table 4]**

| 8 | 7 | 6 | 5 | 4 | 3 | 2 | 1 | |
|---|---|---|---|---|---|---|---|---|
| Length of route selection descriptor | | | | | | | | octet b |
| | | | | | | | | octet b+1 |
| Precedence value of route selection descriptor | | | | | | | | octet b+2 |
| Length of route selection descriptor contents | | | | | | | | octet b+3 |
| | | | | | | | | octet b+4 |
| Route selection descriptor contents | | | | | | | | octet b+5 |
| | | | | | | | | octet c |

For example, the precedence value of the URSP rule may be used to specify the priority of the rule among all URSP rules in the URSP. The field may include a binary encoded value from 0 to 255. For example, the higher the value of the precedence value field, the lower the priority of the URSP rule. In addition, the traffic description may include at least one traffic description component with a variable size. The traffic description component may be encoded with a one octet traffic description component type identifier and a traffic description component value field. Here, as an example, a specific URSP rule used by the terminal to establish or modify a PDU session may be set based on the above-described UPSI format and the URSP rule list format, which will be described later in this regard.

As another example, whether the network (e.g., 5GC) recognizes URSP enforcement may be considered. Specifically, when the terminal applies the URSP rule to specific traffic, the core network may need to check whether the network recognizes the corresponding fact, and if so, how to recognize the corresponding fact. In addition, an operation performed by the network based on whether the terminal applies the URSP rule may be considered.

Here, the network previously did not check whether the application traffic received from the terminal matches the URSP. URSP consists of traffic description and route selection components, as described above. For example, if the application may not be associated with an existing PDU session or there is no PDU session matching the URSP rule, the terminal may request a new PDU session. However, the terminal may only request a new PDU session, and the network may not check whether the requested PDU session matches the URSP.

Here, the network needs to identify which URSP rule the request was generated by in order to determine whether the PDU session establishment request matches the URSP rule. Therefore, the PDU session establishment request may include the Route Selection Component (RSC) of the URSP rule, but may not include information about which URSP rule (i.e., traffic description) it matches.

In consideration of the above-described point, a URSP rule identifier (URID) capable of identifying the URSP rule may be set and provided. For example, a Policy Control Function (PCF) may identify which URSP rule a PDU session establishment request is generated by through the URSP rule identifier. If a URSP rule identifier that matches the PDU session establishment request of the terminal is included, the network may recognize the association between the URSP rule and the PDU session and determine whether it matches the URSP rule of the terminal. For example, an SMF may forward the associated URSP rule identifier to the PCF that manages the UE policy. If the network recognizes that the terminal does not comply with the URSP rule, the network may not allow the terminal to establish a new PDU session according to the policy.

FIG. 6 is a diagram illustrating provisioning of a URSP compliance verification procedure during a terminal registration procedure applicable to the present disclosure. Referring to FIG. 6, a terminal 610 may transmit a registration request to an AMF 620. Here, a UEP container of the registration request may include a URSP compliance capability indication. The AMF 620 may transmit a UE policy association create request to the PCF 630. Thereafter, the PCF 630 may transmit a UE policy association create response to the AMF 620. In addition, the PCF 630 may indicate to report a URSP rule identifier when a new PDU session establishment request occurs in relation to the URSP rule of the terminal. To this end, the PCF 630 may include the URSP rule identifier in the same request and transfer it to the terminal. The PCF 630 may provide PDU session parameter reporting or URSP authentication required indication to the AMF 620, and may also provide PCF binding information based on this. The AMF 620 may transmit the information to the SMF during PDU session establishment procedure. As described above, the function for URSP compliance verification may be provisioned in the terminal registration procedure. The PCF 630 may manage URSP rule compliance, and the AMF 620 may support URSP related operations by transferring necessary information to the SMF.

As a specific example, referring to FIG. 6, the terminal 610 that complies with the URSP and supports URSP identifier reporting may transmit a URSP compliance capability indicator within the UE policy container during the registration procedure. The PCF 630 may determine whether to perform a URSP compliance verification procedure and may transmit a PDU session parameter reporting request or a URSP authorization required indication to the AMF 620. The AMF 620 may record the PCF binding information. Thereafter, the PCF 630 may provide the URSP compliance reporting and the URSP rule within the UE policy container. Here, when configuring the URSP rule, a URSP rule identifier may be added to identify the URSP rule. The PCF 630 provides URSP rules, and each URSP rule may be identified by a URSP identifier.

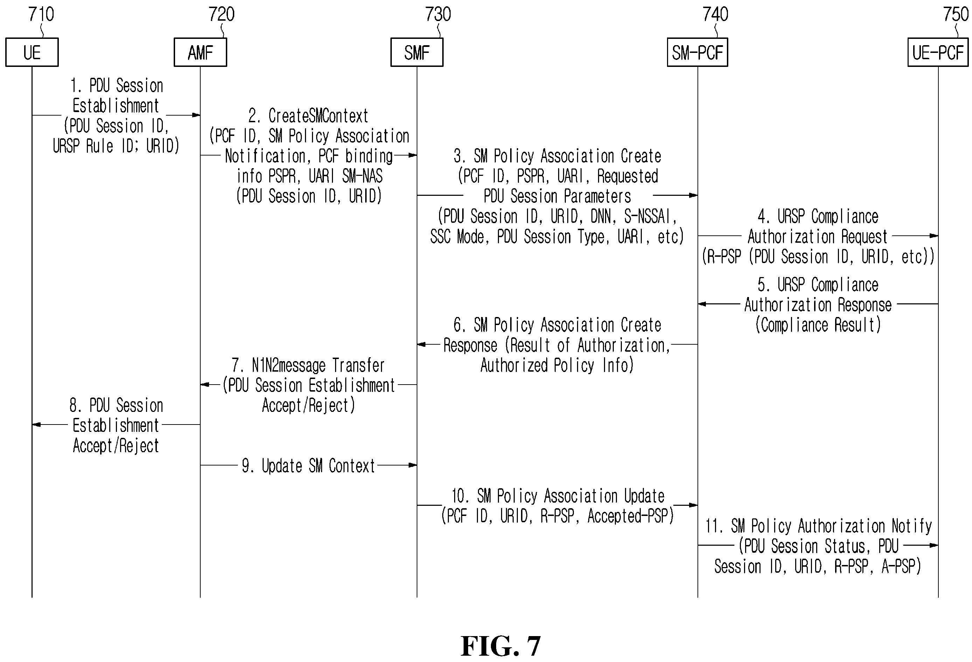

FIG. 7 is a diagram illustrating a method of performing URSP compliance verification in a PDU session establishment procedure applicable to the present disclosure. Referring to FIG. 7, a terminal 710 may evaluate a URSP rule, and then detect an application program matching the URSP rule and decide to establish a new PDU session based on the URSP. Here, if the terminal 710 receives a URSP compliance request for URSP compliance verification during the registration procedure, the terminal 710 may transfer the PDU session establishment request including a URSP rule identifier associated with the URSP rule. For example, a AMF 720 may transfer the PDU session establishment to an SMF 730. Here, if a PDU session parameter reporting request or a URSP authorization required indication is requested from a UE-PCF 750, the AMF 720 may transfer the request to the SMF 730 together with the PCF binding information. For example, if a UE-PCF 750 requests the URSP authorization required indication, an SM-PCF 740 may transfer a URSP compliance authentication request to the UE-PCF 750. The UE-PCF 750 may check the requested PDU session parameters and the URSP rules to determine whether the terminal complies with the URSP rules, and may accept the PDU session requested by the terminal. For example, the UE-PCF 750 may reject the PDU session upon determining that the request does not comply with the URSP rules. If the URSP compliance is accepted, the UE-PCF 750 may transmit a URSP compliance authentication response including the URSP compliance authentication result. If the URSP compliance result is successful, the SM-PCF 740 may transfer the accepted policy information to the SMF 730, and the SMF 730 may transfer the URSP compliance result. For example, if the URSP authorization required indication is requested and the URSP compliance authentication result is not successful, the SMF 730 may reject the PDU session establishment. The AMF 720 may transfer the PDU session establishment accept/reject to the terminal and update the SM context.

When SM-PCF 740 transfers a PDU session parameter reporting request to the UE-PCF 750, the SM-PCF 740 may notify UE-PCF 750 of PDU session status, PDU session ID, and URSP rule identifier. The UE-PCF 750 may store the PDU session ID associated with URSP rule identifier for URSP compliance verification. The terminal 710 may obtain UE policy container and store the URSP rule including URSP rule identifier.

As another example, URSP rule precedence reporting may be performed to make the network recognize URSP enforcement. For example, the terminal may report a URSP rule priority to indicate to the network the attempted URSP rule. The URSP enforcement reporting may be performed during a session management procedure, such as a PDU session establishment procedure or a PDU session modification procedure, when the terminal establishes a new PDU session using a value specified in the requested PDU session parameter of the PDU session selected by the terminal or an existing PDU session matches the requested PDU session parameter of the selected URSP.

For example, the terminal may evaluate the URSP rules in the order of rule precedence for the application traffic. The terminal may determine whether the traffic of the application matches the traffic description of a certain URSP rule. Here, if the terminal checks a valid route selection descriptor, the terminal may check whether there is an existing PDU session that matches all components of the selected route selection descriptor. If there is one or more matching PDU sessions, the terminal may associate the application with the existing PDU session. After that, the terminal may initiate a PDU session modification procedure for reporting a URSP enforcement.

Specifically, the terminal may include a UE policy container including a URSP rule priority applied by the terminal and an operating system identifier in the PDU session modification request message and transmit it. The AMF may transparently transfer the message to the SMF through a "Nsmf_PDUSession_UpdateSMContext" message. After that, the SMF may obtain the UE policy container from the PDU session modification request message and transfer the UE policy container to the PCF using a "Npcf_SMPolicyControl_Update" service operation. The PCF may return a URSP rule corresponding to the URSP rule priority to the SMF.

The SMF may compare the RSD (requested PDU Session parameters with the URSP rules) of the URSP rules received from the PCF with the attributes (DNN, S-NSSAI, etc.) of the PDU session to which the terminal is trying to connect. If they match, the SMF may reject the PDU session modification request with an appropriate cause value. In addition, as an example, the SMF may generate N4 rules (PDR, URR) based on the traffic description of the URSP rules received from the PCF, and provide these rules to the UPF through the N4 session establishment procedure. The SMF may instruct the UPF to report an event when incorrect application traffic is detected in the QoS Flow indicated in the PDR. If the incorrect application traffic is detected, the UPF may block the application traffic and send a report to the SMF. The SMF may instruct the PCF to determine the URSP rule incorrectly applied by the UE. The PCF may URSP rule update of the UE based on local configuration and operator policy.

As another example, if none of the existing PDU sessions matches the selected route selection description, the terminal may attempt to establish a new PDU session with the value specified in the RSD. Here, the terminal may include a UE policy container (URSP rule priority and operating system identifier enforced by the UE) in a PDU session establishment request message and transmit it. The AMF may transfer the PDU session establishment request message (the UE policy container: the URSP rule corresponding to the URSP rule priority and the operating system identifier) to the SMF through the "Nsmf_PDUSession_CreateSMContext" request message.

After receiving the UE policy container in the PDU session establishment request message, the SMF may transfer the UE policy container to the PCF using the "Npcf_SMPolicyControl_Create" service operation. The PCF may return a URSP rule corresponding to the URSP rule priority to the SMF. For example, the SMF may compare the RSD of the URSP rule received from the PCF with the attributes (DNN, S-NSSAI, etc.) of the PDU session that the UE is trying to establish. If they do not match, the SMF may reject the PDU session establishment request with an appropriate cause value.

Also, as an example, the SMF may generate N4 rules (PDR, URR) based on the traffic description of the URSP rule received from the PCF, and provide these rules to the UPF through the N4 session establishment procedure. The SMF may instruct the UPF to report an event when incorrect application traffic is detected in the QoS Flow indicated in the PDR. If incorrect application traffic is detected, the UPF may block the application traffic and transmit a report to the SMF. The SMF may indicate to the PCF the URSP rule incorrectly applied by the terminal. The PCF may determine the URSP rule update of the terminal according to local configuration and operator policy.

Considering the above-described operation, a URSP rule identifier may be used. Here, as an example, the terminal may generate a URSP rule identifier based on a URSP rule list included in the UE policy part contents. Thereafter, the terminal may report the URSP rule identifier during a PDU session establishment or modification procedure associated with the UPSI.

Here, the PLMN information may be a PLMN ID part including the PLMN ID of the PCF or SNPN that provides the UE policy. As another example, the PLMN information may be an additional element that is reported. For example, if the serving PLMN matches the PLMN information reported by the terminal, the terminal may not report the PLMN information.

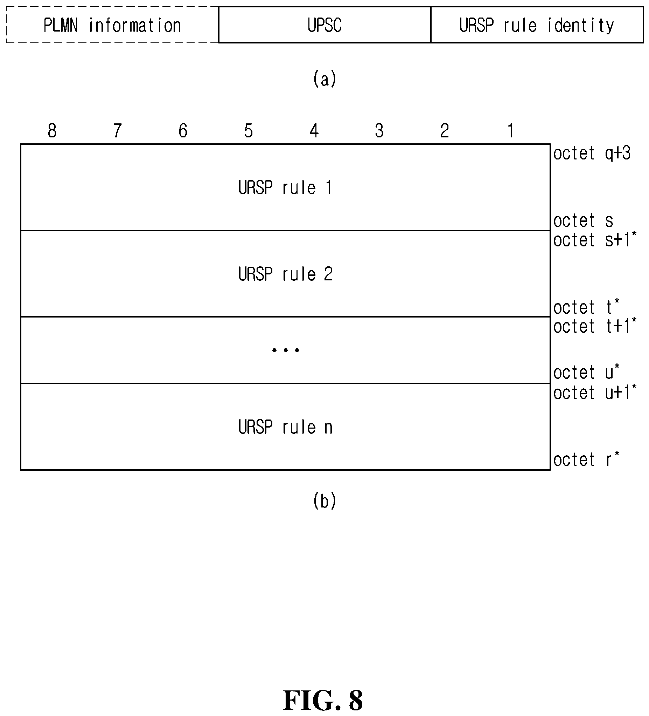

FIG. 8 is a diagram showing URSP information applicable to the present disclosure. Referring to FIG. 8(a), URSP information may include PLMN information, UPSC, and URSP rule identifier. Here, a PLMN information parameter size may be 1 byte. In addition, a UPSC parameter size may also be 1 byte. In addition, a URSP rule identifier size may also be 1 byte, but is not limited thereto. In addition, as an example, the URSP information format may be TLV (type, length, value) or TV (type, value), but is not limited thereto. As an example, when a URSP rule identifier that the network does not recognize is received, the network may recognize the URSP rule identifier as 1.

In addition, as an example, the terminal may generate a URSP rule identifier parameter based on a URSP rule list included in UE policy part contents. Here, if the terminal receives only one URSP rule, the URSP rule identifier may be "1". On the other hand, referring to FIG. 8(b), if the terminal receives multiple URSP rules, [URSP rule 1] may be identified by the URSP rule identifier "1", and [URSP rule 2] may be identified by the URSP rule identifier "2", as shown in FIG.8(b).

As another example, the terminal may generate a URSP rule identifier through a precedence of URSP rule received from the network. More specifically, the terminal may have a preconfigured local policy. The terminal may receive UE policy information from the network. As an example, the terminal may receive UE policy information through a manage UE policy command message from the PCF.

After the terminal receives the UE policy information, the terminal may derive the UPSI and URSP rule(s) from the UE policy section management list parameter. For example, the terminal may derive the UPSI using the PLMN ID and the UPSC. Additionally, the terminal may recognize that the terminal has received the URSP rule(s) using the policy type parameters.

When the terminal receives URSP rule(s), the terminal may generate a URSP rule context. The URSP rule context may include PLMN information, a UPSC, and a URSP rule identifier, and may be as shown in FIG. 8(a). For example, the terminal may assign a URSP rule identifier to each order of URSP rules in the UE policy part contents parameter. The URSP rule identifier may be associated with the UPSC and PLMN information included in the UE policy management command message. In addition, the URSP rule context may include URSP rule information transmitted to a core network element (e.g., AMF, SMF, PCF, etc.).

After that, the terminal may generate one or more parameters in the PDU session establishment request message using the URSP rule instead of the local configuration. If the terminal uses the URSP rule, the terminal may transmit URSP information to the network. For example, the terminal may transmit the URSP information to the AMF. As a specific example, the terminal may transmit the URSP information to the AMF through the UL NAS TRASNPORT message as shown in Table 5. Referring to Table 5, the UL NAS TRANPORT message may include the URSP information, but this is only an example and may not be limited thereto.

**[Table 5]**

| **IEI** | **Information Element** | **Type/Reference** | **Presence** | **Format** | **Length** |
|---|---|---|---|---|---|
| | Extended protocol discriminator | Extended protocol discriminator | M | V | 1 |
| | Security header type | Security header type | M | V | 1/2 |
| | Spare half octet | Spare half octet | M | V | 1/2 |
| | UL NAS TRANSPORT message identity | Message type | M | V | 1 |
| | Payload container type | Payload container type | M | V | 1/2 |
| | Spare half octet | Spare half octet | M | V | 1/2 |
| | Payload container | Payload container | M | LV-E | 3-65537 |
| 12 | PDU session ID | PDU session identity 2 | C | TV | 2 |
| 59 | Old PDU session ID | PDU session identity 2 | O | TV | 2 |
| 8- | Request type | Request type | O | TV | 1 |
| 22 | S-NSSAI | S-NSSAI | O | TLV | 3-10 |
| 25 | DNN | DNN | O | TLV | 3-102 |
| 24 | Additional information | Additional information | O | TLV | 3-n |
| A- | MA PDU session information | MA PDU session information | O | TV | 1 |
| F- | Release assistance indication | Release assistance indication | O | TV | 1 |
| - | **URSP information** | **URSP information** | **O** | **TLV** | **3** |

As another example, the terminal may transmit URSP information to the SMF. As a specific example, the terminal may transmit URSP information to the SMF through a PDU session establishment request message as shown in Table 6. Referring to Table 6, URSP information may be included in the PDU session establishment request message, but this is only one example and may not be limited thereto.

**[Table 6]**

| **IEI** | **Information Element** | **Type/Reference** | **Presence** | **Format** | **Length** |
|---|---|---|---|---|---|
| | Extended protocol discriminator | Extended protocol discriminator | M | V | 1 |
| | PDU session ID | PDU session identity | M | V | 1 |
| | PTI | Procedure transaction identity | M | V | 1 |
| | PDU SESSION ESTABLISHMENT REQUEST message identity | Message type | M | v | 1 |
| | Integrity protection maximum data rate | Integrity protection maximum data rate | M | V | 2 |
| 9- | PDU session type | PDU session type | O | TV | 1 |
| A- | SSC mode | SSC mode | O | TV | 1 |
| 28 | 5GSM capability | 5GSM capability | O | TLV | 3-15 |
| 55 | Maximum number of supported packet filters | Maximum number of supported packet filters | O | TV | 3 |
| B- | Always-on PDU session requested | Always-on PDU session requested | O | TV | 1 |
| 39 | SM PDU DN request container | SM PDU DN request container | O | TLV | 3-255 |
| 7B | Extended protocol configuration options | Extended protocol configuration options | O | TLV-E | 4-65538 |
| 66 | IP header compression configuration | IP header compression configuration | O | TLV | 5-257 |
| 6E | DS-TT Ethernet port MAC address | DS-TT Ethernet port MAC address | O | TLV | 8 |
| 6F | UE-DS-TT residence time | UE-DS-TT residence time | O | TLV | 10 |
| 74 | Port management information container | Port management information container | O | TLV-E | 8-65538 |
| 1F | Ethernet header compression configuration | Ethernet header compression configuration | O | TLV | 3 |
| 29 | Suggested interface identifier | PDU address | O | TLV | 11 |
| 72 | Service-level-AA container | Service-level-AA container | O | TLV-E | 6-n |
| 70 | Requested MBS container | Requested MBS container | O | TLV-E | 8-65538 |
| 34 | PDU session pair ID | PDU session pair ID | O | TLV | 3 |
| 35 | RSN | RSN | O | TLV | 3 |
| **-** | **URSP information** | **URSP information** | **O** | **TV** | **3** |

As another example, the terminal may transmit URSP information to the PCF. As a specific example, the terminal may transmit URSP information to the PCF through a UE state indication message as shown in Table 7. Referring to Table 7, URSP information may be included in the UE state indication message, but this is only one example and may not be limited thereto.

**[Table 7]**

| **IEI** | **Information Element** | **Type/Reference** | **Presence** | **Format** | **Length** |
|---|---|---|---|---|---|
| | PTI | Procedure transaction identity | M | V | 1 |
| | UE STATE INDICATION message identity | UE policy delivery service message type | M | V | 1 |
| | UPSI list | UPSI list | M | LV-E | 9-65531 |
| | UE policy classmark | UE policy classmark | M | LV | 2-4 |
| 41 | UE OS Id | OS Id | O | TLV | 18-242 |
| **-** | **URSP information** | **URSP information** | **O** | **TLV** | **3** |
| NOTE: | The total length of the UE STATE INDICATION message content cannot exceed 65535 octets | | | | |

As another example, the IE (information element) of the URSP information may be as shown in Table 8 below. The IE of the URSP information may include information indicating a URSP rule used by the terminal to establish or modify a PDU session. Referring to Table 8, the URSP information may include a URSP information list information element (URSP information IEI), a PLMN ID, a UPSC, and a URSP rule identifier.

**[Table 8]**

| 8 | 7 | 6 | 5 | 4 | 3 | 2 | 1 | |
|---|---|---|---|---|---|---|---|---|
| URSP information IEI | | | | | | | | octet 1 |
| PLMN ID (MCC + MNC) | | | | | | | | octet 2 |
| UPSC | | | | | | | | octet 3 |
| URSP rule identity | | | | | | | | octet 4 |

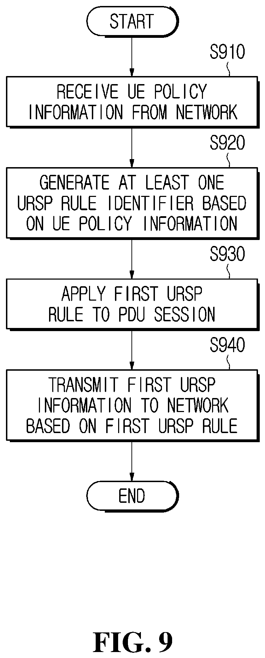

FIG. 9 is a diagram illustrating a method of transmitting URSP information to a network by a terminal applicable to the present disclosure.

Referring to FIG. 9, the terminal may receive UE policy information from the network. (S910) For example, the terminal may obtain UE policy information from a policy control function (PCF) through a manage UE policy command message, but may not be limited thereto. Thereafter, the terminal may generate at least one URSP rule identifier based on the UE policy information received from the network. (S920) Thereafter, the terminal may apply a first URSP rule to the PDU session. (S930) For example, if there is no PDU session matching the URSP for application traffic, the terminal may create a PDU session. Here, the terminal may apply the first URSP rule as the URSP of the PDU session for application traffic. Thereafter, the terminal may transmit first URSP information to the network based on the first URSP rule applied to the PDU session. (S940) For example, the first URSP information may include a first URSP rule identifier and a first UPSC related to the first URSP rule applied to the PDU session. In addition, the first URSP information may further include first PLMN (public land mobile network) information.

When the terminal obtains the UE policy information, the terminal may derive the UPSI and at least one URSP rule from the UE policy section management list parameter. The terminal may derive the UPSI based on the PLMN ID and the UPSC, and derive at least one URSP rule from the UE policy contents parameter based on the UE policy type parameter. In addition, the terminal may generate a URSP rule context for each of the at least one URSP rule. The URSP rule context may include PLMN information, a UPSC, and a URSP rule identifier. For example, the terminal may assign the URSP rule identifier according to the URSP rule order in the UE policy contents parameter based on the UE policy information.

In addition, the assigned URSP rule identifier is associated with UPSC and PLMN information, and the URSP rule context may include URSP rule information transmitted to the network. For example, the terminal may include preconfigured local policy information, but if the URSP for application traffic as described above does not match the PDU session, the terminal may configure a PDU session message through a URSP corresponding to the URSP rule identifier generated based on UE policy information received from the network. That is, the terminal may generate one or more parameter of the PDU session message based on the first URSP rule without using the local policy information. In addition, if the terminal configures the PDU session message based on the first URSP rule, the terminal may transmit the first URSP information corresponding to the first URSP rule to the network, as described above.

As a specific example, the terminal may transmit the first URSP information to the AMF via a UL NAS TRANSPORT message. As another example, the terminal may transmit the first URSP information to the SMF via a PDU session establishment request message. As another example, the terminal may transmit the first URSP information to the PCF through a UE state indication message, as described above.

As the examples of the proposal method described above may also be included in one of the implementation methods of the present disclosure, it is an obvious fact that they may be considered as a type of proposal methods. In addition, the proposal methods described above may be implemented individually or in a combination (or merger) of some of them. A rule may be defined so that information on whether or not to apply the proposal methods (or information on the rules of the proposal methods) is notified from a base station to a terminal through a predefined signal (e.g., a physical layer signal or an upper layer signal).

The present disclosure may be embodied in other specific forms without departing from the technical ideas and essential features described in the present disclosure. Therefore, the above detailed description should not be construed as limiting in all respects and should be considered as an illustrative one. The scope of the present disclosure should be determined by rational interpretation of the appended claims, and all changes within the equivalent scope of the present disclosure are included in the scope of the present disclosure. In addition, claims having no explicit citation relationship in the claims may be combined to form an embodiment or to be included as a new claim by amendment after filing.

### Industrial Applicability

The embodiments of the present disclosure are applicable to various radio access systems. Examples of the various radio access systems include a 3^{rd} generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

## Claims

1. A method of operating a terminal in a wireless communication system, the method comprising:
receiving UE policy information from a network;
generating at least one UE route selection policy (URSP) rule identifier based on the UE policy information received from the network;
applying, by the terminal, a first URSP rule to a protocol data unit (PDU) session; and
transmitting first URSP information to the network based on the first URSP rule applied to the PDU session,
wherein the first URSP information includes the first URSP rule identifier related to the first URSP rule applied to the PDU session and a first UE policy section code (UPSC).

2. The method of claim 1, wherein the URSP information further includes first public and mobile network (PLMN) information.

3. The method of claim 1, wherein the terminal obtains the UE policy information from a policy control function (PCF) through a manage UE policy command message.

4. The method of claim 3,
wherein based on the terminal obtaining the UE policy information, the terminal derives a UE policy section identifier (UPSI) and at least one URSP rule from a UE policy section management list parameter, and
wherein the terminal derives the UPSI based on a PLMN ID and a UPSC and derives the at least one URSP rule from a UE policy contents parameter based on a UE policy type parameter.

5. The method of claim 4,
wherein the terminal generates a URSP rule context for each of the at least one URSP rule based on the obtaining of the at least one URSP rule, and
wherein the URSP rule context includes PLMN information, a UPSC and a URSP rule identifier.

6. The method of claim 5, wherein the terminal assigns the URSP rule identifier according to a URSP rule order in the UE policy contents parameter based on the UE policy information.

7. The method of claim 6,
wherein the assigned URSP rule identifier is associated with the UPSC and the PLMN information, and
wherein the URSP rule context includes URSP rule information transmitted to the network.

8. The method of claim 1,
wherein the terminal includes preconfigured local policy information, and
wherein based on the terminal configuring the PDU session message, the terminal generates at least one parameter of the PDU session message based on the first URSP rule without using local policy information.

9. The method of claim 8, wherein based on the terminal configuring the PDU session message based on the first URSP rule, the terminal transmits the first URSP information corresponding to a first URSP rule to the network.

10. The method of claim 9, wherein the terminal transmits the first URSP information to an access management function (AMF) through a UL NAS TRANSPORT message.

11. The method of claim 9, wherein the terminal transmits the first URSP information to a session management function (SMF) through a PDU session establishment request message.

12. The method of claim 9, wherein the terminal transmits the first URSP information to a policy control function (PCF) through a UE state indication message.

13. A terminal operating in a wireless communication system, comprising:
at least one transceiver;
at least one processor; and
at least one memory operably connected to the at least one processor and configured to store instructions that, when executed, cause the at least one processor to perform a specific operation,
wherein the specific operation:
controls the transceiver to receive UE policy information from a network;
generates at least one UE route selection policy (URSP) rule identifier based on the UE policy information received from the network;
enables the terminal to apply a first URSP rule to a protocol data unit (PDU) session; and
controls the transceiver to transmit first URSP information to the network based on the first URSP rule applied to the PDU session,
wherein the first URSP information includes the first URSP rule identifier related to the first URSP rule applied to the PDU session and a first UE policy section code (UPSC).

14. A method of operating a network in a wireless communication system, the method comprising:
transmitting UE policy information to a terminal; and
receiving first UE route selection policy (URSP) information from the terminal,
wherein the terminal generates at least one UE route selection policy (URSP) rule identifier based on the UE policy information,
wherein based on the terminal applying a first URSP rule to a protocol data unit (PDU) session, the terminal transmits the first URSP information based on the first URSP rule applied to the PDU session, and
wherein the first URSP information includes the first URSP rule identifier related to the first URSP rule applied to the PDU session and a first UE policy section code (UPSC).

15. A network operating in a wireless communication system, comprising:
at least one transceiver;
at least one processor; and
at least one memory operably connected to the at least one processor and configured to store instructions that, when executed, cause the at least one processor to perform a specific operation,
wherein the specific operation:
controls the transceiver to transmit UE policy information to a terminal; and
controls the transceiver to receive first UE route selection policy (URSP) information from the terminal,
wherein the terminal generates at least one UE route selection policy (URSP) rule identifier based on the UE policy information,
wherein based on the terminal applying a first URSP rule to a protocol data unit (PDU) session, the terminal transmits the first URSP information based on the first URSP rule applied to the PDU session, and
wherein the first URSP information includes the first URSP rule identifier related to the first URSP rule applied to the PDU session and a first UE policy section code (UPSC).

16. A device comprising at least one memory and at least one processor functionally connected to the at least one memory, wherein the at least one processor controls the device to:
receive UE policy information from a network;
generate at least one UE route selection policy (URSP) rule identifier based on the UE policy information received from the network;
apply a first URSP rule to a protocol data unit (PDU) session; and
transmit first URSP information to the network based on the first URSP rule applied to the PDU session,
wherein the first URSP information includes the first URSP rule identifier related to the first URSP rule applied to the PDU session and a first UE policy section code (UPSC).

17. A non-transitory computer-readable medium storing at least one instruction, the non-transitory computer-readable recording medium comprising the at least one instruction executable by a processor,
wherein the at least one instruction controls a device to:
receive UE policy information from a network;
generate at least one UE route selection policy (URSP) rule identifier based on the UE policy information received from the network;
apply a first URSP rule to a protocol data unit (PDU) session; and
transmit first URSP information to the network based on the first URSP rule applied to the PDU session,
wherein the first URSP information includes the first URSP rule identifier related to the first URSP rule applied to the PDU session and a first UE policy section code (UPSC).
